Europäisches Patentamt

European Patent Office

Office européen des brevets

(11) Publication number: **0 377 311**
**A1**

## (12) EUROPEAN PATENT APPLICATION

(21) Application number: 89313488.2

(22) Date of filing: 21.12.89

(51) Int. Cl.5: **B29B 13/02, F26B 13/20**

(30) Priority: 06.01.89 GB 8900309

(43) Date of publication of application:
**11.07.90 Bulletin 90/28**

(84) Designated Contracting States:
**DE FR GB**

(71) Applicant: **PROTEC EQUIPMENT COMPANY LIMITED**
**1 Young Place Kelvin Industrial Estate**
**East Kilbride Glasgow G75 0TD(GB)**

(72) Inventor: **Sclater, Alexander**
**16 Broomvale Drive**
**Newton Mearns, Glasgow G77 5NN(GB)**
Inventor: **Russell, William Forgie**
**10 Rowallan Road**
**Thornliebank, Glasgow(GB)**
Inventor: **Casey, James Alexander**
**9 Kent Place, Gardenhall**
**East Kilbride, Glasgow(GB)**

(74) Representative: **Stokes, Graeme Wilson et al**
**c/o Cruikshank & Fairweather 19 Royal**
**Exchange Square**
**Glasgow G1 3AE Scotland(GB)**

(54) Forced circulation airing nozzle box construction.

(57) A forced circulation airing nozzle box for producing a uniform curtain of air consists of mutually similar ducts (13, 14) each of elongate configuration and arranged side-by-side, the ducts being of progressively reducing cross-section lengthwise and having inlets (15, 16) at respectively opposite sides of the side-by-side arrangement. Sheet metal work appended to the ducts defines an elongate mixing chamber (17) which merges with an elongate discharge slot or nozzle (18). Opposite the slot (18), the duct walls (13A, 14A) are provided with rows of uniformly spaced mutually similar circular perforations (19, 20) for dividing air streams in the ducts (13, 14) into uniformly spaced air jets directed transversely into the mixing chamber (17) wherein the air jets mix prior to emerging from the slot (18).

FIG.1

## FORCED CIRCULATION AIRING NOZZLE BOX CONSTRUCTION

This invention relates to a forced circulation airing nozzle box, and to a method of producing an airing jet.

In this description, and in the appended claims, the term "airing" embraces the use of air and any other mixture of gases or any gaseous medium, and the term "air" is to be construed accordingly; and the expression "nozzle box" refers to a duct structure having inlet arrangements for receiving air, and nozzle arrangements for discharging air.

In a process for the manufacture of plastics film for industrial uses, a web of film is subjected to forced circulation airing. This is achieved by moving the web horizontally, by means of a stenter apparatus, between mutually opposed upper and lower banks of nozzle boxes which extend across the web and direct cleaned and heated air to impinge the web surfaces. The success of the manufacturing process depends heavily upon the attainment of extremely close tolerances for temperature and velocity of the impinging air over the entire width of the web, especially when the industry trend is for reducing thickness and increasing production width of web.

According to one aspect of the present invention, there is provided a forced circulation airing nozzle box, comprising first and second mutually similar ducts each of elongate configuration and arranged side-by-side, wall means defining an elongate chamber adjoining the side-by-side arrangement of the ducts, said chamber merging with an elongate discharge slot, and openings providing passage for air to flow from the ducts into the chamber; the said openings in each duct comprising at least one row of uniformly spaced and mutually similar perforations through a wall of the duct opposite said discharge slot, said row extending longitudinally of the duct.

According to another aspect of the present invention, there is provided a method of producing an airing jet, comprising the steps of producing two mutually similar streams of air, directing the air streams to flow separately and in mutually opposite directions within respective elongate side-by-side ducts, admitting the air streams from said ducts into a common elongate mixing chamber adjoining said ducts by way of passage means directed transversely into the mixing chamber, and discharging a mixture of the air streams from the mixing chamber by way of an elongate discharge slot; the said passage means dividing each air stream to form a row of uniformly spaced and mutually similar air jets, said row extending longitudinally of the mixing chamber.

An embodiment of the invention will now be described, by way of example, with reference to the accompanying drawings in which:-

Fig. 1 is a diagrammatic view showing a web moving between upper and lower forced circulation airing nozzle boxes constructed and operating in accordance with the present invention; and

Fig. 2 is a diagrammatic cross-section on the line 2-2 in Fig. 1.

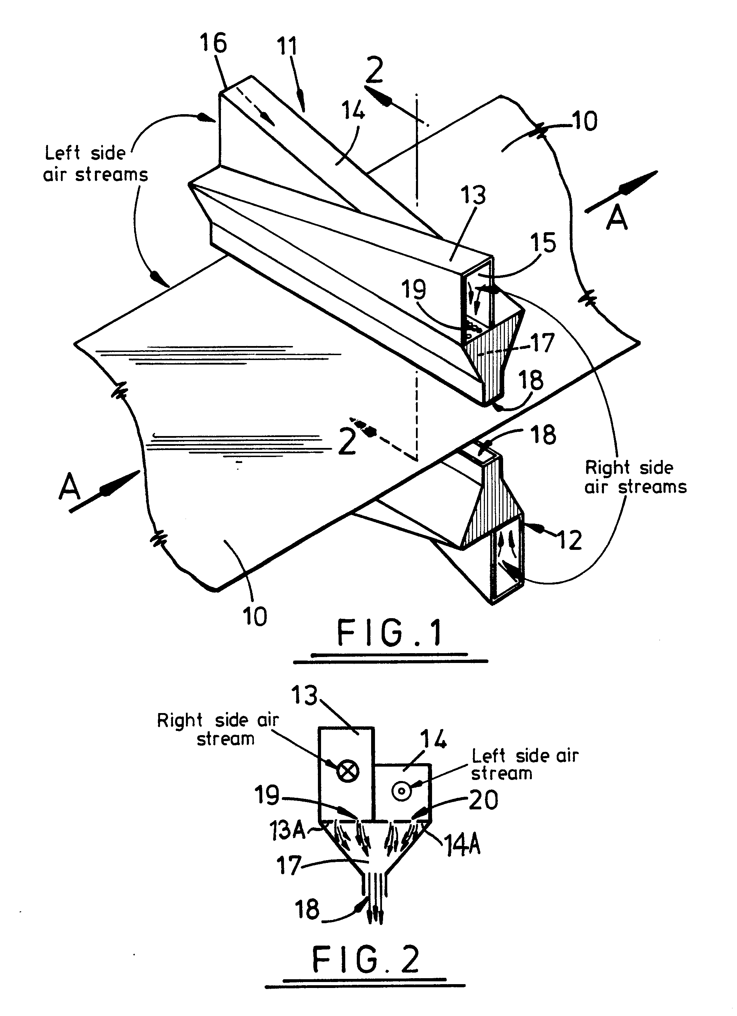

In the drawings, a web 10 undergoing airing treatment is moved by means of a stenter apparatus (not shown) between mutually opposed upper and lower nozzle boxes which are indicated generally by reference numerals 11 and 12 respectively. Each of the nozzle boxes 11, 12 extends across the web 10 normal to the direction of web travel which is indicated by arrows A in Fig. 1 and together discharge uniform curtains of cleaned and heated air mutually displaced above and below the web 10. In practice, the web 10 would be subjected to airing treatment by means of a bank or banks of nozzle boxes mounted within an enclosure or casing (not shown) within which would also be mounted fans (not shown) for producing forced circulation of air.

The upper and lower boxes 11, 12 are mutually similar in construction and therefore a single nozzle box only is described as follows. The nozzle box 11 consists of first and second ducts 13, 14 each of elongate configuration (with reference to the transverse dimension of the web 10) and arranged side-by-side. The ducts 13, 14 are of progressively reducing cross-section and have inlets 15, 16 arranged at mutually opposite ends of the side-by-side arrangement. The duct inlets 15, 16 are connected at their ends with further ducting (not shown) supplying mutually separate streams of air. Between the ducts 13, 14 and the web 10, metal work is formed to define an elongate chamber 17 adjoining the side-by-side arrangement of the ducts 13, 14 and merging with a nozzle arrangement in the form of an elongate discharge slot 18. Passage for circulating air to flow from the ducts 13, 14 into the chamber 17 is provided in each duct by two rows of uniformly spaced mutually similar perforations 19, 20, these rows extending longitudinally of the ducts for the full length thereof parallel with the slot 18. The peforations are of circular configuration and are directed transversely into the chamber 17 through walls 13A, 14A of the ducts 13, 14 opposite the slot 18.

In operation of the nozzle boxes above described, the two mutually similar streams of air are directed into inlets 15 and 16 so that these air streams flow separately and in mutually opposite directions in the ducts 13, 14. A constant air flow velocity along the distributive length of each duct is promoted by the progressively reducing cross-section. The air streams are directed transversely into the common elongate chamber 17 by way of the perforations 19, 20 which divide the air streams to form rows of uniformly spaced and mutually similar air jets. Within the chamber 17, the air jets mix and the mixed air is then discharged in a uniform air curtain by way of the nozzle arrangement 18.

Modifications of the nozzle box construction described above, within the scope of the present invention, include using one or three or more rows of perforations 19, 20; and using perforations of other than circular configuration, for example of rectilinear configuration, such as square or rectangular perforations.

**Claims**

1. A forced circulation airing nozzle box, comprising first and second mutually similar ducts (13, 14) each of elongate configuration and arranged side-by-side, wall means defining an elongate chamber (17) adjoining the side-by-side arrangement of the ducts (13, 14), said chamber merging with an elongate discharge slot (18), and openings (19, 20) providing passage for air to flow from the ducts (13, 14) into the chamber (17), characterised in that the said openings (19, 20) in each duct (13, 14) comprise at least one row of uniformly spaced and mutually similar perforations (19, 20) through a wall (13A, 14A) of the duct opposite said discharge slot (18), said row extending longitudinally of the duct (13, 14).

2. A nozzle box as claimed in claim 1, characterised in that each said perforations (19, 20) is of circular configuration.

3. A method of producing an airing jet, comprising the steps of producing two mutually similar streams of air, directing the air streams to flow separately and in mutually opposite directions within respective elongate side-by-side ducts (13, 14), admitting the air streams from said ducts (13, 14) into a common elongate mixing chamber (17) adjoining said ducts (13, 14) by way of passage means (19, 20) directed transversely into the mixing chamber (17), and discharging a mixture of the air streams from the mixing chamber (17) by way of an elongate discharge slot (18); characterised in that the said passage means (19,20) divides each air stream to form a row of uniformly spaced and mutually similar air jets, and said row extends longitudinally of the mixing chamber (17).

Left side
air streams

Right side
air streams

FIG.1

Right side air
stream

Left side air
stream

FIG.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 170 075 (SCOTT)<br>* Column 4, line 23 - column 5, line 11; figures 2-4 *<br>--- | 1-3 | B 29 B 13/02<br>F 26 B 13/20 |
| X | PATENT ABSTRACTS OF JAPAN, vol. 9, no. 121 (M-382)[1844], 25th May 1985; & JP-A-60 8037 (MITSUBISHI JUKOGYO K.K.) 16-01-1985<br>* Abstract *<br>--- | 1-3 | |
| X | DE-C-3 704 910 (LINDAUER DORNIER)<br>* Column 2, lines 50-55; column 5, lines 24-50; figure 4b *<br>----- | 1-3 | |

TECHNICAL FIELDS SEARCHED (Int. Cl.5)

B 29 C
F 26 B

The present search report has been drawn up for all claims

| Place of search | Date of completion of the search | Examiner |
|---|---|---|
| THE HAGUE | 09-04-1990 | ATTALLA G. |

EPO FORM 1503 03.82 (P0401)